# EUROPÄISCHE PATENTANMELDUNG

(11) **EP 4 552 451 A1**
(43) Veröffentlichungstag der Anmeldung: **14.05.2025**
(21) Anmeldenummer: 24203111.0
(22) Anmeldetag: 27.09.2024
(51) Int. Cl.: A01B 69/00, A01B 69/04

(54) **LANDWIRTSCHAFTLICHE ARBEITSMASCHINE**

(30) Priorität: 08.11.2023 DE 102023130882
(71) Anmelder: CLAAS KGaA mbH, 33428 Harsewinkel (DE)
(72) Erfinder: Bone, Sven, 49124 Georgsmarienhütte (DE); Korthals, Timo, 33818 Leopoldshöhe (DE); Redenius, Jannik, 32361 Pr. Oldendorf (DE); Lücke, Andreas, 33184 Altenbeken (DE); Skiba, Andreas, 33647 Bielefeld (DE); Schröder, Axel, 33332 Gütersloh (DE)
(74) Vertreter: CLAAS Gruppe

(57) **Zusammenfassung**

Die vorliegende Erfindung betrifft eine landwirtschaftliche Arbeitsmaschine (1) mit einem Chassis (3) und einer an dem Chassis (3) angeordneten Kabine (8). Die landwirtschaftliche Arbeitsmaschine (1) umfasst eine Steuereinrichtung (12), die dazu vorgesehen und eingerichtet ist, die landwirtschaftliche Arbeitsmaschine (1) in einem autonomen Betriebsmodus (B_{A}) zu betreiben. Die landwirtschaftliche Arbeitsmaschine (1) umfasst zumindest zwei Sensorsysteme (13) zur Detektion von Objekten im Umfeld (U) der landwirtschaftlichen Arbeitsmaschine (1) mit jeweils zumindest einem Sensor (14, 14.1, 14.2, 14.3), wobei die Sensorsysteme (13) jeweils mit der Steuereinrichtung (12) zur Übertragung von Sensordaten verbunden sind. Die landwirtschaftliche Arbeitsmaschine (1) ist dadurch gekennzeichnet, dass die Steuereinrichtung (12) dazu vorgesehen und eingerichtet ist, die landwirtschaftliche Arbeitsmaschine (1) im autonomen Betriebsmodus (B_{A}) basierend auf von zumindest einem der Sensorsysteme (13) bereitgestellten Sensordaten anzusteuern, wobei die Sensorsysteme (13) auf verschiedenen Sensortechnologien basieren.

## Beschreibung

Die vorliegende Erfindung betrifft eine landwirtschaftliche Arbeitsmaschine, insbesondere einen Traktor, gemäß dem Oberbegriff des unabhängigen Patentanspruchs 1.

In der modernen Landwirtschaft sind stets Bestrebungen dahingehend vorhanden die Produktivität und Wirtschaftlichkeit der Arbeitsprozesse zu erhöhen. Im Zuge dieser Bestrebungen ist in den letzten Jahren zunehmend das Thema "Autonomie" in den Fokus der Landwirtschaft geraten. Es besteht der Wunsch landwirtschaftliche Arbeitsmaschinen einsetzen zu können, die einen Arbeitsauftrag auf dem Hof und/oder einem Feld autonom ausführen können, also ohne, dass ein Bediener in die Steuerung der landwirtschaftlichen Arbeitsmaschine eingreifen muss. Einige Konzepte solcher landwirtschaftlicher Arbeitsmaschinen, die in einem autonomen Betriebsmodus betrieben werden können, sehen keine am Chassis der Arbeitsmaschine angeordnete Kabine vor, sodass die Arbeitsmaschine stets unbemannt betrieben wird. Andere Konzepte sehen hingegen nach wie vor eine Kabine vor, wodurch sich die Möglichkeit ergibt neben einem autonomen Betriebsmodus auch einen manuellen Betriebsmodus, in welchem ein Bediener in der Kabine zumindest zeitweise in die Steuerung der landwirtschaftlichen Maschine eingreift, umzusetzen.

Ein wesentlicher Aspekt für den Betrieb einer landwirtschaftlichen Arbeitsmaschine in einem autonomen Betriebsmodus ist die Beobachtung des Umfelds der Arbeitsmaschine, da es insbesondere im Umfeld der Arbeitsmaschine zu sicherheitskritischen Betriebssituationen kommen kann, in denen die landwirtschaftliche Arbeitsmaschine im autonomen Betriebsmodus unmittelbar selbststätig reagieren muss. Für die Beobachtung des Umfelds einer Arbeitsmaschine ist es erforderlich eine hierfür geeignete Sensorik an der Arbeitsmaschine vorzusehen. Eine landwirtschaftliche Arbeitsmaschine mit einer solchen Sensorik ist beispielsweise aus der EP 3 871 481 A1 bekannt.

Die EP 3 871 481 A1 betrifft im Einzelnen ein landwirtschaftliches Fahrzeug mit einem vorderen LIDAR-Sensor, welcher einen vorausliegenden Feldbereich, also einen Bereich vor dem Fahrzeug, auf den sich das Fahrzeug zubewegt, scannt, und einem hinteren LIDAR-Sensor, welcher einen hinter dem Fahrzeug liegenden Feldbereich scannt, also einen hinteren Bereich, auf dem sich das Fahrzeug zuvor bewegt hat. Das Fahrzeug verfügt über ein GPS-System, welches eine Position und Koordinaten des gescannten Feldbereichs vor und hinter dem Fahrzeug bereitstellt. Eine Recheneinheit vergleicht die Sensordaten der Feldbereiche vor und hinter dem Fahrzeug, um dem Fahrzeug eine autonome Führung zu geben und/oder die von dem Fahrzeug durchgeführten landwirtschaftlichen Arbeiten zu automatisieren.

Besonders wichtig im Kontext einer Vermeidung von sicherheitskritischen Betriebssituationen und somit einem sicheren Betrieb der Arbeitsmaschine im autonomen Betriebsmodus ist speziell die Detektion von Objekten im Umfeld der landwirtschaftlichen Arbeitsmaschine, da eine Kollision zwischen der landwirtschaftlichen Arbeitsmaschine und Objekten im Umfeld der Arbeitsmaschine, die kein Erntegut bzw. Arbeitsmaterial darstellen, unbedingt vermieden werden muss. Insbesondere bei solchen landwirtschaftlichen Arbeitsmaschinen, die in einem autonomen Betriebsmodus betrieben werden können und auf einer klassischen Maschinenarchitektur mit einer Kabine basieren, ist eine zuverlässige Detektion von Objekten in allen potenziell auftretenden Betriebssituationen und Umgebungssituationen während des Betriebs der landwirtschaftlichen Arbeitsmaschine mit gewissen Herausforderungen an die Sensorik verbunden.

Ausgehend hiervon ist es demnach die Aufgabe der vorliegenden Erfindung die beschriebenen Nachteile des Standes der Technik auszuräumen und insbesondere eine zuverlässige und robuste Detektion von Objekten im Umfeld einer in einem autonomen Betriebsmodus betreibbaren landwirtschaftlichen Arbeitsmaschine mit einer Kabine zu gewährleisten.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Arbeitsmaschine Gegenstand der entsprechenden abhängigen Patentansprüche 2 bis 11 sind.

Demnach betrifft die vorliegende Erfindung eine landwirtschaftliche Arbeitsmaschine, insbesondere einen Traktor, mit einem Chassis und einer an dem Chassis angeordneten Kabine. Die landwirtschaftliche Arbeitsmaschine umfasst eine Steuereinrichtung, die dazu vorgesehen und eingerichtet ist, die landwirtschaftliche Arbeitsmaschine in einem autonomen Betriebsmodus zu betreiben. Die landwirtschaftliche Arbeitsmaschine umfasst zumindest zwei Sensorsysteme zur Detektion von Objekten im Umfeld der landwirtschaftlichen Arbeitsmaschine mit jeweils zumindest einem Sensor, wobei die Sensorsysteme jeweils mit der Steuereinrichtung zur Übertragung von Sensordaten verbunden sind. Die landwirtschaftliche Arbeitsmaschine ist dadurch gekennzeichnet, dass die Steuereinrichtung dazu vorgesehen und eingerichtet ist, die landwirtschaftliche Arbeitsmaschine im autonomen Betriebsmodus basierend auf von zumindest einem der Sensorsysteme bereitgestellten Sensordaten anzusteuern, wobei die Sensorsysteme auf verschiedenen Sensortechnologien basieren.

Die Nutzung von zumindest zwei auf verschiedenen Sensortechnologien basierenden Sensorsystemen stellt bei in einem autonomen Betriebsmodus betreibbaren landwirtschaftlichen Arbeitsmaschinen mit einer Kabine, also solchen Arbeitsmaschinen, die eine klassische Architektur aufweisen, eine zuverlässige und robuste Detektion von Objekten in allen Betriebssituationen und Umgebungsverhältnissen sicher. Durch das Vorhandensein der Kabine ist eine Maschinengeometrie in aller Regel deutlich komplexer als bei kabinenlosen Arbeitsmaschinen. Eine komplexe Maschinengeometrie wiederum sorgt dafür, dass gewisse Bereiche im Umfeld der Arbeitsmaschine mit Sensoren nur einer bestimmten Sensortechnologien ausgehend von der landwirtschaftlichen Arbeitsmaschine möglicherweise nicht oder nur unzureichend erfasst werden können, Objekte in diesen Bereichen im Umfeld der Arbeitsmaschine von dieser einen Sensorik somit unter Umständen nicht detektiert würden. Die Verwendung von mehreren Sensorsystemen, die auf verschiedenen Sensortechnologien basieren, erlaubt es die Schwächen einer Sensortechnologie durch eine andere Sensortechnologie auszugleichen und somit auch bei einer komplexen Maschinengeometrie, Betriebssituationen und Umgebungsverhältnissen eine Detektion von Objekten in allen Bereichen im Umfeld der Arbeitsmaschine zu ermöglichen. Ferner kann die Detektion von Objekten durch die Verwendung mehrerer auf verschiedenen Sensortechnologien basierender Sensorsysteme abgesichert werden. Für den Fall, dass beispielsweise ein Sensorsystem ausfallen sollte, steht zumindest ein weiteres Sensorsystem bereit, welches den Weiterbetrieb der landwirtschaftlichen Arbeitsmaschine im autonomen Betriebsmodus zumindest kurzfristig sicherstellen kann.

Gemäß einer vorteilhaften Weiterbildung der Erfindung ist vorgesehen, dass zumindest eines der Sensorsysteme auf einer Sensortechnologie basiert, welche die Detektion von Objekten im Umfeld der landwirtschaftlichen Arbeitsmaschine unabhängig von äußeren Umgebungseinflüssen erlaubt.

Landwirtschaftliche Arbeitsmaschinen arbeiten oft in Umgebunden, in denen während der Arbeit eine hohe Schmutzpartikelbelastung auf die Arbeitsmaschine, beispielsweise in Form von Staub, einwirkt. Solche Schmutzpartikel lagern sich auch auf den Sensoren der für die Detektion von Objekten vorgesehenen Sensorsystemen ab, was zumindest für einige Sensortechnologien problematisch ist. Befinden sich nämlich hinreichend Schmutzpartikel auf einer für die Detektion erforderlichen Oberfläche dieser Sensoren kann der Sensor seine Funktion unter Umständen nicht mehr ordnungsgemäß ausführen, wodurch eine Detektion von Objekten nicht länger zuverlässig erfolgen kann. Gleiches gilt zum Beispiel bei einer Veränderung der Lichtverhältnisse. Bei anderen Sensortechnologien führt eine Ablagerung von Schmutzpartikeln oder eine Veränderung der Lichtverhältnisse hingegen nicht zum Verlust der Funktion. Die Nutzung einer Sensortechnologie, die grundsätzlich eine Detektion von Objekten im Umfeld der Arbeitsmaschine unabhängig von äußeren Umgebungseinflüssen erlaubt, entfaltet somit insbesondere in widrigen Verhältnissen ihre Vorteile und erlaubt auch dann noch eine zuverlässige Detektion von Objekten.

Gemäß einer vorteilhaften Weiterbildung der Erfindung ist vorgesehen, dass zumindest eines der Sensorsysteme auf einer Sensortechnologie basiert, welche die Detektion von Objekten im weiteren Umfeld der landwirtschaftlichen Arbeitsmaschine erlaubt.

Die Möglichkeit Objekte bereits im weiteren Umfeld der Arbeitsmaschine detektieren zu können ist im Hinblick auf eine zu berücksichtigende Reaktionszeit der landwirtschaftlichen Arbeitsmaschine im autonomen Betriebsmodus von erheblichem Vorteil. Werden Objekte bereits im weiteren Umfeld der Arbeitsmaschine detektiert kann die Arbeitsmaschine frühzeitig reagieren und muss nicht umgehend gemäß einer Notfallroutine handeln, wie es der Fall wäre, wenn das Objekt erst im unmittelbaren Umfeld der Arbeitsmaschine detektiert würde. Der durchgeführte Arbeitsprozess kann hierdurch besser abgesichert und Stillstandzeiten können miniert werden.

Gemäß einer vorteilhaften Weiterbildung der Erfindung ist vorgesehen, dass zumindest eines der Sensorsysteme auf einer Sensortechnologie basiert, welche Sensordaten bereitstellt, die eine Klassifikation von im Umfeld der landwirtschaftlichen Arbeitsmaschine detektierten Objekten mittels der Steuereinrichtung erlauben.

Vorzugsweise ist vorgesehen, dass die Steuereinrichtung dazu vorgesehen und eingerichtet ist, eine mehrstufige Klassifikation der Sensordaten durchzuführen, wobei in einer ersten Stufe zwischen lebenden und nicht-lebenden Objekten unterschieden wird.

Ein besonders wichtiger Aspekt im Kontext der Detektion von Objekten im autonomen Betriebsmodus ist die Erkennung von lebenden Objekten im Umfeld der landwirtschaftlichen Arbeitsmaschine. Lebende Objekte müssen zuverlässig bestimmbar sein und die Arbeitsmaschine muss im autonomen Betriebsmodus bei einer Detektion von lebenden Objekten sicher reagieren, beispielsweise indem die Arbeitsmaschine umgehend stoppt, da eine Kollision mit lebenden Objekten schwerwiegende Folgen hat. Nicht jede Sensortechnologie erlaubt allerdings eine stets zuverlässige Klassifikation von Objekten. Die Verwendung eines Sensorsystem, welches auf einer Sensortechnologie basiert, die Sensordaten bereitstellen kann, die eine zuverlässige Objektklassifikation zwischen lebend und nicht-lebend erlaubt, sorgt dafür, dass der Betrieb der Arbeitsmaschine im autonomen Betriebsmodus in allen Gebieten möglich wird, ohne dass zusätzliche Absicherungsmechanismen, beispielsweise über eine Einbindung des Bedieners, vorgesehen werden müssen.

Gemäß einer vorteilhaften Weiterbildung der Erfindung ist vorgesehen, dass die landwirtschaftliche Arbeitsmaschine drei Sensorsysteme zur Detektion von Objekten im Umfeld der landwirtschaftlichen Arbeitsmaschine mit jeweils zumindest einem Sensor umfasst.

Die Nutzung dreier Sensorsysteme, die auf verschiedenen Sensortechnologien basieren, erhöht den Grad der Absicherung im autonomen Betriebsmodus. Fällt beispielsweise ein Sensorsystem aus, so stehen zwei weitere Sensorsysteme bereit, um den Betrieb der landwirtschaftlichen Arbeitsmaschine aufrechtzuerhalten. Ferner wird die Genauigkeit bei der Detektion von Objekten erhöht.

Vorzugsweise ist vorgesehen, dass ein Sensorsystem am Chassis der landwirtschaftlichen Arbeitsmaschine und zwei Sensorsysteme an der Kabine der landwirtschaftlichen Arbeitsmaschine angeordnet sind.

Gemäß einer vorteilhaften Weiterbildung der Erfindung ist vorgesehen, dass das am Chassis angeordnete Sensorsystem frontseitig der landwirtschaftlichen Arbeitsmaschine am Chassis, das eine der an der Kabine angeordneten Sensorsysteme am Kabinendach und das andere der an der Kabine angeordneten Sensorsysteme seitlich der Kabine und/oder auf dem Kabinendach angeordnet ist.

Vorzugsweise ist vorgesehen, dass das am Chassis angeordnete Sensorsystem an einem frontseitigen Anbaurahmen des Chassis angeordnet ist.

Vorzugsweise ist vorgesehen, dass das eine der an der Kabine angeordneten Sensorsysteme am Kabinendach im Frontbereich und/oder Heckbereich der Kabine angeordnet ist.

Vorzugsweise ist vorgesehen, dass das andere der an der Kabine angeordneten Sensorsysteme seitlich der Kabine im Bereich der A-Säulen der Kabine sowie in Fahrzeughöhenrichtung im Bereich einer unteren Hälfte der Kabine und/oder am Kabinendach im Frontbereich der Kabine angeordnet ist.

Die Anordnung von Sensorsystemen am Chassis und an der Kabine, insbesondere an den spezifischen Positionen, sorgt dafür, dass trotz komplexer Maschinengeometrie das Umfeld der landwirtschaftlichen Arbeitsmaschine vollumfänglich beobachtet werden kann. Die Anordnung aller Sensoren eines Sensorsystems am Chassis oder an der Kabine sorgt ferner dafür, dass es im Wesentlichen keine Relativbewegungen zwischen den Sensoren eines Sensorsystems gibt. Der Rechenaufwand für die Steuereinrichtung wird hierdurch minimiert und das Ergebnis bzw. die Genauigkeit bei der Detektion von Objekten wird verbessert.

Gemäß einer vorteilhaften Weiterbildung der Erfindung ist vorgesehen, dass die Sensorsysteme auf einer RaDAR-Technologie, einer LiDAR-Technologie oder einer Kamera-Technologie basieren.

Die genannten Technologien RaDAR, LiDAR und Kamera stellen für eine Detektion von Objekten vorteilhafte Sensortechnologien dar mit jeweils unterschiedlichen Stärken aber mit insgesamt ausgewogenen Charakteristiken, wodurch jede Technologie grundsätzlich auch allein für die Detektion von Objekten ungeachtet welcher Klasse geeignet ist.

Gemäß einer vorteilhaften Weiterbildung der Erfindung ist vorgesehen, dass das am Chassis angeordnete Sensorsystem auf der RaDAR-Technologie, das eine der an der Kabine angeordneten Sensorsysteme auf der Kamera-Technologie und das andere der an der Kabine angeordneten Sensorsysteme auf der LiDAR-Technologie basiert.

Die Nutzung einer RaDAR-Technologie, einer LiDAR-Technologie und einer Kamera-Technologie für die Sensorsysteme, mit den jeweils unterschiedlichen Stärken, in Kombination mit der spezifischen Anbringung des jeweiligen Sensorsystems in dem Bereich, in dem die jeweilige Sensortechnologie ihre Stärken im Hinblick auf die Detektion von Objekten bestmöglich in Anbetracht der Maschinengeometrie ausspielen kann, sorgt dafür, dass die Detektion von Objekten insgesamt in allen Betriebssituationen und bei allen Umgebungsverhältnissen in Anbetracht einer effizienten Nutzung von zur Verfügung stehenden Ressourcen erfolgen kann und somit die landwirtschaftliche Arbeitsmaschine im autonomen Betriebsmodus stets angemessen und schnell sowie ohne Eingriff eines Bedieners reagieren kann.

Gemäß einer vorteilhaften Weiterbildung der Erfindung ist vorgesehen, dass die Steuereinrichtung dazu vorgesehen und eingerichtet ist, die von den Sensorsystemen bereitgestellten Sensordaten redundant oder gemeinsam zur Detektion von Objekten im Umfeld der landwirtschaftlichen Arbeitsmaschine zu verarbeiten.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemä-ßen landwirtschaftlichen Arbeitsmaschine, die sowohl in einem manuellen Betriebsmodus als auch in einem autonomen Betriebsmodus betrieben werden kann;

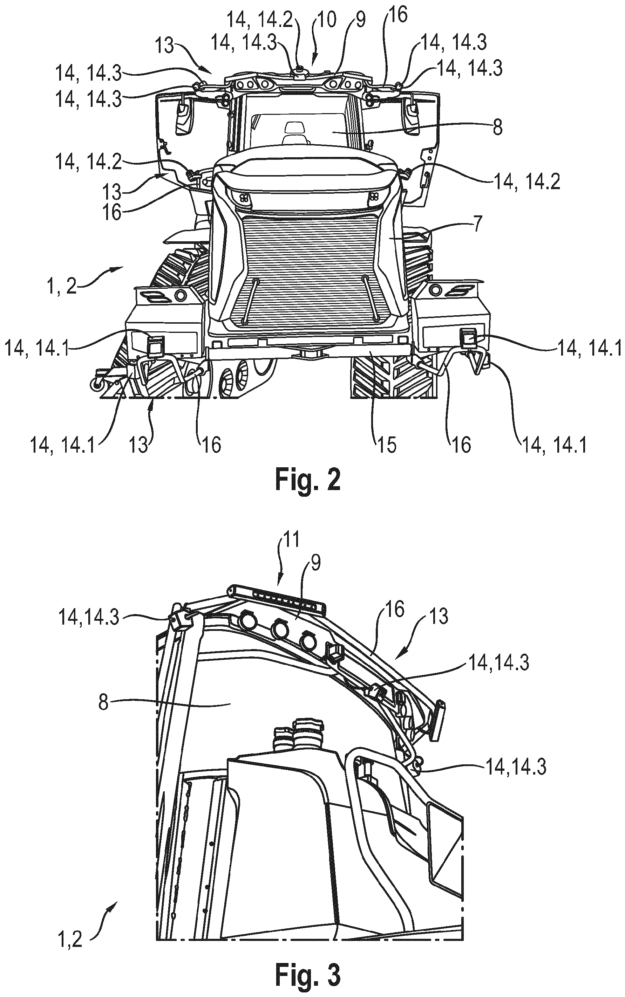

- FIG. 2: eine schematische und exemplarische Darstellung eines Frontbereichs einerKabine der landwirtschaftlichen Arbeitsmaschine gemäß FIG. 1 mit Sensoren mehrerer Sensorsysteme zur Detektion von Objekten im Umfeld der landwirtschaftlichen Arbeitsmaschine; und
- FIG. 3: eine schematische und exemplarische Darstellung eines Heckbereichs der Kabine der landwirtschaftlichen Arbeitsmaschine gemäß FIG. 1 mit Sensoren eines Sensorsystems zur Detektion von Objekten im Umfeld der landwirtschaftlichen Arbeitsmaschine; und

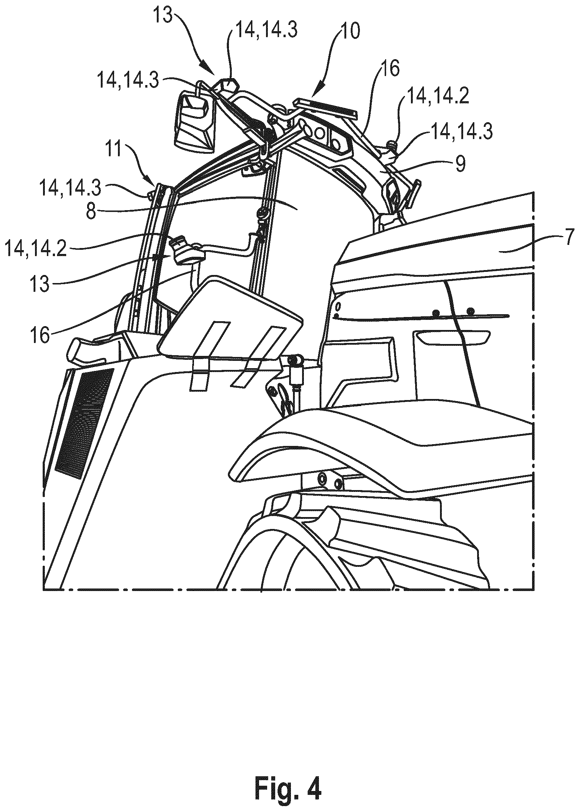

- FIG. 4: eine schematische und exemplarische Darstellung eines seitlichen Bereichs der Kabine der landwirtschaftlichen Arbeitsmaschine gemäß FIG. 1 mit Sensoren mehrerer Sensorsysteme zur Detektion von Objekten im Umfeld der landwirtschaftlichen Arbeitsmaschine.

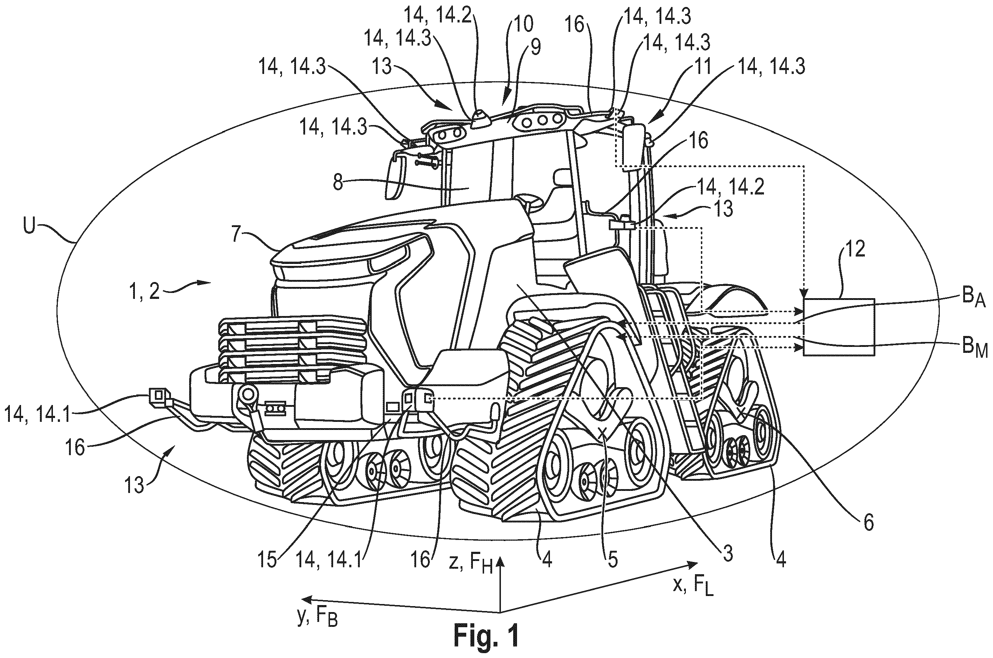

FIG. 1 zeigt eine erfindungsgemäße landwirtschaftliche Arbeitsmaschine 1 in Gestalt eines Traktors 2 in einer schematischen und exemplarischen Darstellung, wobei der grundsätzliche Aufbau einer als Traktor 2 ausgeführten landwirtschaftlichen Arbeitsmaschine 1 als dem Fachmann bekannt angesehen wird. Die erfindungsgemäße landwirtschaftliche Arbeitsmaschine 1 kann anhand von drei Erstreckungsrichtungen räumlich definiert werden, die durch ein Koordinatensystem in FIG. 1 beispielhaft kenntlich gemacht sind. Die erste Erstreckungsrichtung ist dabei die Längsrichtung der landwirtschaftlichen Arbeitsmaschine 1, im Folgenden auch als Fahrzeuglängsrichtung F_{L} bezeichnet, die in x-Achsenrichtung verläuft, die zweite Erstreckungsrichtung ist die Breitenrichtung der landwirtschaftlichen Arbeitsmaschine 1, im Folgenden auch als Fahrzeugbreitenrichtung F_{B} bezeichnet, die in y-Achsenrichtung verläuft, und die dritte Erstreckungsrichtung ist die Höhenrichtung der landwirtschaftlichen Arbeitsmaschine 1, im Folgenden auch als Fahrzeughöhenrichtung F_{H} bezeichnet, die in z-Achsenrichtung verläuft.

Die landwirtschaftliche Arbeitsmaschine 1 umfasst unter anderem ein Chassis 3, Bodeneingriffsmittel 4, die einer Vorderachse 5 und einer Hinterachse 6 zugeordnet sind und in den FIGs. in Gestalt von Raupenlaufwerken dargestellt sind, eine am Chassis 3 angeordnete Motorhaube 7 sowie eine am Chassis 3 angeordnete Kabine 8 mit einem Kabinendach 9, welches sich vom Frontbereich 10 der Kabine 8 zum Heckbereich 11 der Kabine 8 erstreckt. Die Kabine 8 kann mittels - in den FIGs. nicht dargestellten - Dämpfungselementen am Chassis 3 angeordnet sein. In der Kabine 8 kann sich ein - in den FIGs. nicht dargestellter-Bediener der landwirtschaftlichen Arbeitsmaschine 1 zur Steuerung derselben aufhalten kann. Hierzu sind innerhalb der Kabine 8 üblicherweise eine oder mehrere - in den FIGs. ebenfalls nicht dargestellte - Bedien- und Steuereinrichtungen zur Bedienung und Steuerung der landwirtschaftlichen Arbeitsmaschine 1 vorgesehen.

Wesentlich für die erfindungsgemäße landwirtschaftliche Arbeitsmaschine 1 ist nunmehr, dass diese nicht nur in einem manuellen Betriebsmodus B_{M}, also einem Betriebsmodus, in welchem während des Betriebs der landwirtschaftlichen Arbeitsmaschine 1 zumindest zeitweise ein Eingriff seitens des Bedieners in die Steuerung der landwirtschaftlichen Arbeitsmaschine 1, sondern auch in einem autonomen Betriebsmodus B_{A} betrieben werden kann. Der autonome Betriebsmodus B_{A} der landwirtschaftlichen Arbeitsmaschine 1 ist im Rahmen der Erfindung als ein Betriebsmodus definiert, welcher während des Betriebs der landwirtschaftlichen Arbeitsmaschine 1 keinen Eingriff seitens des Bedieners in die Steuerung der landwirtschaftlichen Arbeitsmaschine 1 erfordert, weder für den Antrieb und die Spurführung der landwirtschaftlichen Arbeitsmaschine 1 noch für die Ansteuerung von - in den FIGs. nicht dargestellten - Arbeitsaggregaten zur Ausführung von Arbeitsaufträgen. Der autonome Betriebsmodus B_{A} der erfindungsgemäßen landwirtschaftlichen Arbeitsmaschine 1 entspricht demnach einem Betrieb einer unbemannten autonomen landwirtschaftlichen Arbeitsmaschine.

Damit die landwirtschaftliche Arbeitsmaschine 1 im autonomen Betriebsmodus B_{A} betrieben werden kann, umfasst die landwirtschaftliche Arbeitsmaschine 1 eine Steuereinrichtung 12. Diese Steuereinrichtung 12 ist demnach dazu vorgesehen und eingerichtet, die landwirtschaftliche Arbeitsmaschine 1 in dem autonomen Betriebsmodus B_{A} zu betreiben. Die Steuereinrichtung 12 ist dazu vorgesehen und eingerichtet, verschiedene Daten von verschiedenen Datenquellen drahtlos und/oder kabelgebunden zu empfangen und diese zur Ansteuerung der landwirtschaftlichen Arbeitsmaschine 1 im autonomen Betriebsmodus B_{A} zu verarbeiten. Die Steuereinrichtung 12 kann auch dazu vorgesehen und eigerichtet sein, Daten zu empfangen und zu verarbeiten, die für die Ansteuerung im manuellen Betriebsmodus B_{M} der landwirtschaftlichen Arbeitsmaschine 1 benötigt werden. Hierfür kann allerdings auch eine von der Steuereinrichtung 12 separate Steuereinrichtung vorgesehen sein.

Ein wesentlicher Aspekt für den Betrieb der landwirtschaftlichen Arbeitsmaschine 1 im autonomen Betriebsmodus B_{A}, ungeachtet dessen an welchem Ort, also beispielsweise auf einem Hof, auf öffentlichen Straßen und Wegen und/oder einem Feld, die landwirtschaftliche Arbeitsmaschine 1 im autonomen Betriebsmodus B_{A} betrieben wird, ist die Detektion von Objekten im Umfeld U der landwirtschaftlichen Arbeitsmaschine 1. Damit die Detektion von Objekten im Umfeld U der landwirtschaftlichen Arbeitsmaschine 1 möglich ist, ist es erforderlich, dass die landwirtschaftliche Arbeitsmaschine 1 eine Sensorik umfasst.

Die erfindungsgemäße landwirtschaftliche Arbeitsmaschine 1 umfasst erfindungsgemäß zumindest zwei Sensorsysteme 13 zur Detektion von Objekten im Umfeld U der landwirtschaftlichen Arbeitsmaschine 1. Jedes Sensorsystem 13 umfasst dabei zumindest einen Sensor 14. Jedes Sensorsystem 13 mit zumindest einem Sensor 14 basiert weiterhin auf einer spezifischen Sensortechnologie. Mit anderen Worten, der oder die Sensoren 14 eines Sensorsystems 13 sind Sensoren 14 einer gleichen Sensortechnologie. Jedes Sensorsystem 13 ist mit der Steuereinrichtung 12 zur Übertragung von Sensordaten verbunden. Die Steuereinrichtung 12 ist somit dazu vorgesehen und eigerichtet, basierend auf von zumindest einem der Sensorsysteme 13 bereitgestellten Sensordaten die landwirtschaftliche Arbeitsmaschine 1 im autonomen Betriebsmodus B_{A} anzusteuern, also demnach abhängig von der Objektsituation im Umfeld U der landwirtschaftlichen Arbeitsmaschine 1. Damit der Betrieb der landwirtschaftlichen Arbeitsmaschine 1 im autonomen Betriebsmodus B_{A} in allen potenziell auftretenden Betriebssituationen und bei allen potentiell auftretenden Umgebungsverhältnissen/-einflüssen erfolgen kann, basieren die Sensorsysteme 13 auf verschiedenen Sensortechnologien. Verschiedene Sensortechnologien haben verschiedene Stärken und Schwächen, sodass bei einer Nutzung lediglich eines Sensorsystems, welches auf nur einer Sensortechnologie basiert, unter Umständen nicht in allen Betriebssituationen und/oder bei allen Umgebungsverhältnissen/-einflüssen eine Detektion von Objekten im Umfeld U der landwirtschaftlichen Arbeitsmaschine 1 und somit ein Betrieb der landwirtschaftlichen Arbeitsmaschine 1 im autonomen Betriebsmodus B_{A} zuverlässig sichergestellt werden könnte. Durch die Verwendung zumindest zweier Sensorsysteme 13, die auf verschiedenen Sensortechnologien basieren, kann diesem Umstand Rechnung getragen werden.

Die Steuereinrichtung 12 kann dazu vorgesehen und eingerichtet sein, die von den Sensorsystemen 13 bereitgestellten Sensordaten zur Detektion von Objekten im Umfeld U der landwirtschaftlichen Arbeitsmaschine 1 entweder redundant oder gemeinsam zu verarbeiten. Bei einer redundanten Verarbeitung werden die Sensordaten verschiedener Sensoren 14 und/oder verschiedener Sensorsysteme 13 jeweils für sich auf Objekte im Umfeld U der landwirtschaftlichen Arbeitsmaschine 1 hin analysiert, wodurch eine Absicherung bei der Detektion von Objekten im Umfeld U der landwirtschaftlichen Arbeitsmaschine 1 möglich wird. Bei einer gemeinsamen Verarbeitung werden die Sensordaten verschiedener Sensoren 14 und/oder verschiedener Sensorsysteme 13 miteinander verwoben und ein hieraus entstehender angereicherter Datensatz dann auf Objekte im Umfeld U der landwirtschaftlichen Arbeitsmaschine 1 hin analysiert, wodurch die Genauigkeit der Detektion von Objekten erhöht werden kann.

Um die Betriebssicherheit im autonomen Betriebsmodus B_{A} weiter zu erhöhen, kann es auch vorgesehen sein, dass die landwirtschaftliche Arbeitsmaschine 1 ein weiteres Sensorsystem 13 zur Detektion von Objekten im Umfeld U der landwirtschaftlichen Arbeitsmaschine 1 mit zumindest einem Sensor 14, demnach also drei Sensorsysteme 13, umfasst. Eine solche Ausgestaltung ist beispielhaft in FIG. 1 dargestellt. Auch dieses weitere Sensorsystem 13 ist in einer solchen Ausgestaltung mit der Steuereinrichtung 12 zur Übertragung von Sensordaten verbunden, sodass die Steuereinrichtung 12 dazu vorgesehen und eingerichtet ist, für die Ansteuerung der landwirtschaftliche Arbeitsmaschine 1 im autonomen Betriebsmodus B_{A} auch Sensordaten von diesem weiteren Sensorsystem 13 zu berücksichtigen. Auch bei einer Ausgestaltung mit dem weiteren Sensorsystem 13, also mit drei Sensorsystemen 13, gilt, dass die Sensorsysteme 13 auf verschiedenen Sensortechnologien basieren. Das heißt, jedes der drei verwendeten Sensorsysteme 13 basiert auf einer eigenen Sensortechnologie, die von der Sensortechnologie der anderen verwendeten Sensorsysteme 13 verschieden ist.

Die Sensortechnologien, auf denen die Sensorsysteme 13 basieren, sind vorzugsweise eine RaDAR-Technologie, eine LiDAR-Technologie oder eine Kamera-Technologie. Mit anderen Worten, basiert ein Sensorsystem 13 auf der RaDAR-Technologie so sind sämtliche der Sensoren 14 dieses Sensorsystems 13 RaDAR-Sensoren 14.1. Basiert ein Sensorsystem 13 hingegen auf der LiDAR-Technologie so sind sämtliche der Sensoren 14 dieses Sensorsystems 13 LiDAR-Sensoren 14.2. Basiert ein Sensorsystem 13 auf der Kamera-Technologie so sind sämtliche Sensoren 14 dieses Sensorsystems 13 Kamera-Sensoren 14.3, insbesondere Monokameras und/oder Stereokameras.

Für eine betriebssichere Detektion von Objekten im Umfeld U der landwirtschaftlichen Arbeitsmaschine 1 im autonomen Betriebsmodus B_{A} ist es vorteilhaft die Sensortechnologien der Sensorsysteme 13 nach gewissen Kriterien zu wählen. Von Vorteil ist es insbesondere, wenn zumindest eines der Sensorsysteme 13 auf einer Sensortechnologie basiert, welche die Detektion von Objekten im Umfeld U der landwirtschaftlichen Arbeitsmaschine 1 unabhängig von äußeren Umgebungseinflüssen erlaubt. Alternativ oder zusätzlich ist es insbesondere von Vorteil, wenn zumindest eines der Sensorsysteme 13 auf einer Sensortechnologie basiert, welche die Detektion von Objekten im weiteren Umfeld der landwirtschaftlichen Arbeitsmaschine 1, vorzugsweise einem Umfeld mit einem Radius von bis zu 32 m ausgehend von der landwirtschaftlichen Arbeitsmaschine 1, erlaubt. Weiter ist es alternativ oder zusätzlich insbesondere von Vorteil, wenn zumindest eines der Sensorsysteme 13 auf einer Sensortechnologie basiert, welche Sensordaten bereitstellt, die eine Klassifikation von im Umfeld U der landwirtschaftlichen Arbeitsmaschine 1 detektierten Objekten mittels der Steuereinrichtung 12 erlaubt. Die Steuereinrichtung 12 kann zur Klassifikation von detektierten Objekten verschiedene Methoden oder Algorithmen verwenden, die wahlweise auf klassischer Objekterkennung oder künstlicher Intelligenz basieren. Vorzugsweise verwendet die Steuereinrichtung 12 ein lernfähiges künstliches neuronales Netz zur Klassifikation von detektierten Objekten.

Bezugnehmend auf die zuvor genannten bevorzugten Kriterien bei der Wahl der Sensortechnologie und die bevorzugten Sensortechnologien RaDAR-Technologie, LiDAR-Technologie und Kamera-Technologie verhält es sich so, dass ein Sensorsystem 13, welches auf der RaDAR-Technologie basiert, seine Stärken insbesondere in einer von äußeren Umgebungseinflüssen unabhängigen Detektion von Objekten im Umfeld U der landwirtschaftlichen Arbeitsmaschine 1 entfaltet. Schwächen entfaltet ein auf der RaDAR-Technologie basierendes Sensorsystem 13 hingegen beispielsweise dann, wenn eine Objektklassifikation anhand der Sensordaten mittels der Steuereinrichtung 12 durchgeführt werden soll. Ein auf einer Kamera-Technologie basierendes Sensorsystem 13 liefert hingegen Sensordaten, die sich besonders gut für die Durchführung einer Klassifikation von detektierten Objekten eignen. Schwächen hat ein Sensorsystem 13, welches auf der Kamera-Technologie basiert, hingegen beispielsweise bei einer Detektion von Objekten, die unabhängig von äußeren Umgebungseinflüssen sein soll. Ein auf der LiDAR-Technologie basierendes Sensorsystem 13 eignet sich besonders gut für die Detektion von Objekten im weiteren Umfeld der landwirtschaftlichen Arbeitsmaschine 1. Schwächen eines Sensorsystems 13, welches auf der LiDAR-Technologie basiert, sind beispielsweise jedoch die hohen Investitionskosten und der benötigte Bauraumbedarf.

Sofern die Steuereinrichtung 12 von einem Sensorsystem 13 Sensordaten erhält, die eine Klassifikation von detektierten Objekten erlaubt, ist die Steuereinrichtung 12 dazu vorgesehen und eingerichtet, diese Sensordaten einer mehrstufigen Klassifikation zu unterziehen. Ein besonders relevanter Aspekt im Kontext der Detektion von Objekten im autonomen Betriebsmodus B_{A} ist darin zu sehen, lebende Objekte im Umfeld U der landwirtschaftlichen Arbeitsmaschine 1 zuverlässig zu bestimmen, da bei der Detektion von lebenden Objekten der Betrieb umgehend unterbrochen bzw. gestoppt werden muss. Die Steuereinrichtung 12 ist demnach dazu vorgesehen und eingerichtet, in einer ersten Stufe der Klassifikation von detektierten Objekten im Umfeld U der landwirtschaftlichen Arbeitsmaschine 1 lediglich zwischen lebenden und nicht-lebenden Objekten zu unterscheiden. Weitere sich daran anschließende Stufen der mittels der Steuereinrichtung 12 durchführbaren Klassifikation können dann eine Unterscheidung zwischen verschiedenen Klassen von lebenden und nicht-lebenden Objekten ermöglichen.

Wie bereits beschrieben kann die landwirtschaftliche Arbeitsmaschine 1 gemäß einer Ausführungsform drei Sensorsysteme 13 zur Detektion von Objekten im Umfeld U der landwirtschaftlichen Arbeitsmaschine 1 mit jeweils zumindest einem Sensor 14 umfassen, wobei die drei Sensorsysteme 13 auf verschiedenen Sensortechnologien basieren. Bei einer solchen Ausgestaltung ist es vorzugsweise vorgesehen, dass ein Sensorsystem 13 am Chassis 3 der landwirtschaftlichen Arbeitsmaschine 1 und die beiden weiteren Sensorsysteme 13 jeweils an der Kabine 8 der landwirtschaftlichen Arbeitsmaschine 1 angeordnet sind. Das am Chassis 3 angeordnete Sensorsystem 13 kann, wie dargestellt, frontseitig der landwirtschaftlichen Arbeitsmaschine 1 am Chassis 3, vorzugsweise an einem frontseitigen Anbaurahmen 15 des Chassis 3, angeordnet sein. Das eine der beiden an der Kabine 8 angeordneten Sensorsysteme 13 kann am Kabinendach 10, vorzugsweise im Frontbereich 10 und/oder Heckbereich 11 der Kabine 8, angeordnet sein. Das andere der beiden an der Kabine 8 angeordneten Sensorsysteme 13 kann seitlich der Kabine 8, vorzugsweise im Bereich der A-Säulen der Kabine 8 sowie in Fahrzeughöhenrichtung F_{H} gesehen in der unteren Hälfte der Kabine 8, und/oder auf dem Kabinendach 9, vorzugsweise im Frontbereich 10 der Kabine 8, angeordnet sein. Das am Chassis 3 angeordnete Sensorsystem 13 ist vorzugsweise ein Sensorsystem 13, welches auf der RaDAR-Technologie umfasst. Die beiden an der Kabine 8 angeordneten Sensorsysteme 13 sind demnach vorzugsweise Sensorsysteme 13, die auf der LiDAR-Technologie und der Kamera-Technologie basieren. Die Sensoren 14 der Sensorsysteme 13 können dabei vorzugsweise mittels Bügelstrukturen 16 am Chassis 3 oder der Kabine 8 angeordnet sein. Sofern solche Bügelstrukturen 16 vorgesehen sind, sind die Sensoren 14 an den Bügelstrukturen 16 und die Bügelstrukturen 16 entweder am Chassis 3 oder an der Kabine 8 befestigt.

Bei der in den FIGs. dargestellten Ausführungsform umfasst das am Chassis 3 angeordnete auf der RaDar-Technologie basierende Sensorsystem 13 vier RaDAR-Sensoren 14.1, von denen jeweils zwei in Fahrzeuglängsrichtung F_{L} rechtsseitig und linksseitig der Motorhaube 7 an dem frontseitigen Anbaurahmen 15 des Chassis 3 angeordnet sind. Das an der Kabine 8 angeordnete auf der LiDAR-Technologie basierende Sensorsystem 13 umfasst drei LiDAR-Sensoren 14.2, von denen zwei LiDAR-Sensoren 14.2 seitlich im Bereich der A-Säulen der Kabine 8 und in Fahrzeughöhenrichtung F_{H} gesehen in der unteren Hälfte der Kabine 8 und ein LiDAR-Sensor 14.2 auf dem Kabinendach 9 im Frontbereich 10 der Kabine 8 angeordnet sind. Das an der Kabine 8 angeordnete auf der Kamera-Technologie basierende Sensorsystem 13 umfasst acht Kamera-Sensoren 14.3. Fünf dieser Kamera-Sensoren 14.3 sind im Frontbereich 10 der Kabine 8 entlang einer vorderen Dachkante 17 angeordnet, wobei zumindest einige von diesen Kamera-Sensoren 14.3 voneinander beabstandet sind. Drei dieser Kamera-Sensoren 14.3 sind im Heckbereich 11 der Kabine 8 entlang einer hinteren Dachkante 18 angeordnet, wobei diese allesamt voneinander beabstandet sind.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliche Arbeitsmaschine
- 2: Traktor
- 3: Chassis
- 4: Bodeneingriffsmittel
- 5: Vorderachse
- 6: Hinterachse
- 7: Motorhaube
- 8: Kabine
- 9: Kabinendach
- 10: Frontbereich der Kabine
- 11: Heckbereich der Kabine
- 12: Steuereinrichtung
- 13: Sensorsystem
- 14: Sensor
- 14.1: RaDAR-Sensor
- 14.2: LiDAR-Sensor
- 14.3: Kamera-Sensor
- 15: Anbaurahmen
- 16: Bügelstruktur

- F_{L}: Fahrzeuglängsrichtung
- F_{B}: Fahrzeugbreitenrichtung
- F_{H}: Fahrzeughöhenrichtung
- B_{M}: Manueller Betriebsmodus
- B_{A}: Autonomer Betriebsmodus
- U: Umfeld

## Patentansprüche

1. Landwirtschaftliche Arbeitsmaschine (1), insbesondere Traktor (2), mit einem Chassis (3) und einer an dem Chassis (3) angeordneten Kabine (8), wobei die landwirtschaftliche Arbeitsmaschine (1) eine Steuereinrichtung (12) umfasst, die dazu vorgesehen und eingerichtet ist, die landwirtschaftliche Arbeitsmaschine (1) in einem autonomen Betriebsmodus (B_{A}) zu betreiben, wobei die landwirtschaftliche Arbeitsmaschine (1) zumindest zwei Sensorsysteme (13) zur Detektion von Objekten im Umfeld (U) der landwirtschaftlichen Arbeitsmaschine (1) mit jeweils zumindest einem Sensor (14, 14.1, 14.2, 14.3) umfasst, wobei die Sensorsysteme (13) jeweils mit der Steuereinrichtung (12) zur Übertragung von Sensordaten verbunden sind, **dadurch gekennzeichnet, dass** die Steuereinrichtung (12) dazu vorgesehen und eingerichtet ist, die landwirtschaftliche Arbeitsmaschine (1) im autonomen Betriebsmodus (B_{A}) basierend auf von zumindest einem der Sensorsysteme (13) bereitgestellten Sensordaten anzusteuern, wobei die Sensorsysteme (13) auf verschiedenen Sensortechnologien basieren.

2. Landwirtschaftliche Arbeitsmaschine (1) nach Anspruch 1, **dadurch gekennzeichnet, dass** zumindest eines der Sensorsysteme (13) auf einer Sensortechnologie basiert, welche die Detektion von Objekten im Umfeld (U) der landwirtschaftlichen Arbeitsmaschine (1) unabhängig von äußeren Umgebungseinflüssen erlaubt.

3. Landwirtschaftliche Arbeitsmaschine (1) nach Anspruch 1 oder 2, **dadurch gekennzeichnet, dass** zumindest eines der Sensorsysteme (13) auf einer Sensortechnologie basiert, welche die Detektion von Objekten im weiteren Umfeld der landwirtschaftlichen Arbeitsmaschine (1) erlaubt.

4. Landwirtschaftliche Arbeitsmaschine (1) nach einem der Ansprüche 1 bis 3, **dadurch gekennzeichnet, dass** zumindest eines der Sensorsysteme (13) auf einer Sensortechnologie basiert, welche Sensordaten bereitstellt, die eine Klassifikation von im Umfeld (U) der landwirtschaftlichen Arbeitsmaschine (1) detektierten Objekten mittels der Steuereinrichtung (12) erlauben.

5. Landwirtschaftliche Arbeitsmaschine (1) nach Anspruch 4, **dadurch gekennzeichnet, dass** die Steuereinrichtung (12) dazu vorgesehen und eingerichtet ist, eine mehrstufige Klassifikation der Sensordaten durchzuführen, wobei in einer ersten Stufe zwischen lebenden und nicht-lebenden Objekten unterschieden wird.

6. Landwirtschaftliche Arbeitsmaschine (1) nach einem der Ansprüche 1 bis 5, **dadurch gekennzeichnet, dass** die landwirtschaftliche Arbeitsmaschine (1) drei Sensorsysteme (13) zur Detektion von Objekten im Umfeld (U) der landwirtschaftlichen Arbeitsmaschine (1) mit jeweils zumindest einem Sensor (14, 14.1, 14.2, 14.3) umfasst.

7. Landwirtschaftliche Arbeitsmaschine (1) nach Anspruch 6, **dadurch gekennzeichnet, dass** ein Sensorsystem (13) am Chassis (3) der landwirtschaftlichen Arbeitsmaschine (1) und zwei Sensorsysteme (13) an der Kabine (8) der landwirtschaftlichen Arbeitsmaschine (1) angeordnet sind.

8. Landwirtschaftliche Arbeitsmaschine (1) nach Anspruch 7, **dadurch gekennzeichnet, dass** das am Chassis (3) angeordnete Sensorsystem (13) frontseitig der landwirtschaftlichen Arbeitsmaschine (1) am Chassis (3), vorzugsweise an einem frontseitigen Anbaurahmen (15) des Chassis (3), das eine der an der Kabine (8) angeordneten Sensorsysteme (13) am Kabinendach (9), vorzugsweise im Frontbereich (10) und/oder Heckbereich (11) der Kabine (8), und das andere der an der Kabine angeordneten Sensorsysteme (13) seitlich der Kabine (8), vorzugsweise im Bereich der A-Säulen der Kabine (8) sowie in Fahrzeughöhenrichtung (F_{H}) im Bereich einer unteren Hälfte der Kabine (8), und/oder auf dem Kabinendach (9), vorzugsweise im Frontbereich (10) der Kabine (8), angeordnet ist.

9. Landwirtschaftliche Arbeitsmaschine (1) nach einem der Ansprüche 1 bis 8, **dadurch gekennzeichnet, dass** die Sensorsysteme (13) auf einer RaDAR-Technologie, einer LiDAR-Technologie oder einer Kamera-Technologie basieren.

10. Landwirtschaftliche Arbeitsmaschine (1) nach einem der Ansprüche 7 oder 8 in Kombination mit Anspruch 9, **dadurch gekennzeichnet, dass** das am Chassis (3) angeordnete Sensorsystem (13) auf der RaDAR-Technologie, das eine der an der Kabine (8) angeordneten Sensorsysteme (13) auf der Kamera-Technologie und das andere der an der Kabine (8) angeordneten Sensorsysteme (13) auf der LiDAR-Technologie basiert.

11. Landwirtschaftliche Arbeitsmaschine (1) nach einem der Ansprüche 1 bis 10, **dadurch gekennzeichnet, dass** die Steuereinrichtung (12) dazu vorgesehen und eingerichtet ist, die von den Sensorsystemen (13) bereitgestellten Sensordaten redundant oder gemeinsam zur Detektion von Objekten im Umfeld (U) der landwirtschaftlichen Arbeitsmaschine (1) zu verarbeiten.
